# EUROPEAN PATENT APPLICATION

(11) **EP 1 707 948 A1**
(43) Date of publication of application: **04.10.2006**
(21) Application number: 05075749.1
(22) Date of filing: 31.03.2005
(51) Int. Cl.: G01N 25/16

(54) **Dilatometer for measuring shrinkage or expansion of a sample, system comprising the dilatometer and a sample, and a sample for use in the dilatometer**

(71) Applicant: Stichting Dutch Polymer Institute, 5612 AB Eindhoven (NL)
(72) Inventor: van der Beek, Maurice Hubertus Elisabeth, 5642 CP Eindhoven (NL); Peters, Gerardus Wilhelmus Maria, 5246 RB Rosmalen (NL); Kunen, Joseph Mathias Gerardus, 3123 PN Schiedam (NL)
(74) Representative: Winckels, Johannes Hubertus F.

(57) **Abstract**

Dilatometer for measuring shrinkage or expansion of a sample and system, comprising the dilatometer and the sample, wherein the dilatometer is provided with a first and second member which, in combination, define a chamber for the sample, wherein the dilatometer is arranged to apply a relative movement of the first and second member with respect to each other for shearing the sample, and wherein the chamber is provided with a structure for, in use, mechanically engaging the sample for substantially preventing a relative movement of the first member with respect to a first-member-facing-part of the sample and a relative movement of the second member with respect to a second-member-facing-part of the sample, in a direction substantially parallel to the relative movement of the first and second member.

## Description

The invention relates to a dilatometer for measuring shrinkage or expansion of a sample, wherein the dilatometer is provided with a first and second member which, in combination, define a chamber for the sample.

The invention also relates to a sample apparently intended for use in the dilatometer, to a system for measuring shrinkage or expansion, comprising a dilatometer and a sample, and to a sample of the system.

Dilatometers provided with a first and second member which, in combination, define a chamber for the sample are known per se, e.g. dilatometers of the piston-die type. The known dilatometers, however, have the disadvantage that they cannot measure shrinkage or expansion of the sample under shear or can only measure shrinkage or expansion of the sample under shear at low shear rates, which are lower than shear rates encountered under industrial conditions. The known dilatometers, therefore, can only, if at all, measure shrinkage or expansion of the sample under conditions which have limited practical relevance.

It is an object of the invention to at least partly solve the problem of the known dilatometers as described above.

Thereto, according to the invention a dilatometer is provided according to claim 1. This provides the advantage that the relative movement of the first and second member with respect to each other efficiently, and in a well-defined and well-controlled manner, introduces shearing in the sample. This allows for application of higher shear rates, than shear rates possible with dilatometers known of the prior art.

Preferably the structure is arranged to, in use, allow for a relative movement of the first member with respect to the first-member-facing-part of the sample and/or a relative movement of the second member with respect to the second-member-facing-part of the sample, in a direction in which, in use, the shrinkage or expansion of the sample is measured. This allows for substantially unhindered shrinkage or expansion of the sample in the direction in which, in use, the shrinkage or expansion is measured.

In an embodiment of a dilatometer according to the invention, the dilatometer is provided with a sample in the chamber, and is a first surface of the first member in mechanical engagement with the first-member-facing-part of the sample and a second surface of the second member in mechanical engagement with the second-member-facing-part of the sample. This provides the advantage that large shear forces can be applied to the sample, as the sample is substantially prevented from slipping along the first surface and second surface in the direction substantially parallel to the movement of the first and second member. This in turn allows for the possibility of applying a high shear-rate.

Preferably the first surface of the first member and/or the second surface of the second member is provided with at least one groove and/or ledge. Even more preferably the first surface and/or second surface are provided with a plurality of grooves and/or ledges. This provides the advantage, that efficiently and in a simple manner the relative movement of the first member with respect to the first-member-facing-part of the sample and/or the relative movement of the second member with respect to the second-member-facing-part of the sample, in the direction substantially parallel to the relative movement of the first and second member can substantially be prevented, over a large part of the sample.

Preferably the first and second member, in combination, define a substantially annular chamber for the sample. This provides the advantage that a radial thickness of the sample can be chosen sufficiently small to enable rapid cooling or heating of the sample, substantially without introducing thermal gradients within the sample. In an annular sample the radial thickness can also be chosen sufficiently small, while, independently, the axial height of the sample can be chosen such to provide enough sample volume for the shrinkage and/or expansion of the sample to be measured accurately.

Preferably the dilatometer is arranged to apply a relative rotation of the first and second member with respect to each other for shearing the sample. This provides the advantage that the shear can be applied to the radial inner and outer surfaces of the annular sample in a well-defined manner. The substantially annular sample forms an endless sample, so that end-effects of the shearing do not, at least less, affect the measurements.

Preferably, at least in use, a surface of the chamber is provided with a friction reducing layer, e.g. with a dry friction reducing layer, such as PTFE or DLC, for, in use, substantially reducing friction of the relative movement of the first member with respect to the first-member-facing-part of the sample and/or the relative movement of the second member with respect to the second-member-facing-part of the sample, in the direction in which, in use, the shrinkage or expansion of the sample is measured. This provides the advantage, that in movement of the sample, in the direction in which, in use, the shrinkage or expansion of the sample is measured, friction is at least reduced, thereby reducing measurement errors which may result from the friction. Therefore, the shrinkage or expansion of the sample can be measured accurately. In particular with combination of the well-defined application of shear to the sample and the reduced friction of the movement in the direction in which, in use, the shrinkage or expansion is measured allows the dilatometer to measure a response of the sample to shear very accurately.

The invention will now be further elucidated with reference to the drawing, in which, by way of non-limiting example,
Fig. 1 shows a schematic sectional view of a dilatometer according to the invention; and
Fig. 2 shows an axial cross section of the dilatometer of Fig. 1 along line I-I.

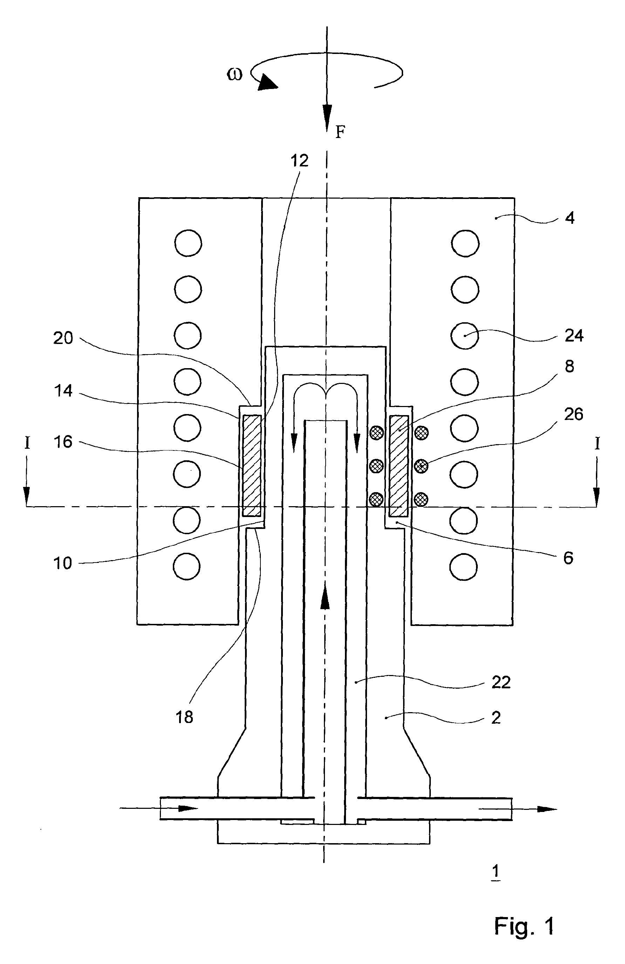

Fig. 1 shows a schematic sectional view of a dilatometer 1 according to the invention. The dilatometer 1 is provided with a first and second member 2, 4 which, in combination, define a chamber 6 for a sample 8. In the example of Fig. 1, the first member 2 comprises a piston and the second member 4 comprises a die. In this example, the piston and die are arranged substantially concentrically and define, in combination, a substantially annular chamber for a substantially annular sample. The first member 2 is provided with a first surface 10, which is directed towards a first-member-facing-part 12 of the sample 8. Hence, the first-member-facing-part 12 faces the first member 2. The second member 4 is provided with a second surface 14, which is directed towards a second-member-facing-part 16 of the sample 8. Hence, the second-member-facing-part 16 faces the second member 4. In the chamber 6, the sample 8 is in abutment with substantially radially extending surfaces 18 and 20 of the first and second member 2, 4, respectively.

The dilatometer as described thus far can be used for the characterisation of bulk properties of materials, e.g. liquids or polymers, dependent on processing conditions. Examples of bulk properties can be physical or chemical phase changes (e.g. glass transition, crystallisation and melting, network formation or reaction kinetics), expansion (compressibility) or density (specific volume). The dilatometer 1 can for example be used for determining the macroscopic shrinkage of a structure forming, crystallising polymer. Thereto, the dilatometer 1 is operated as follows.

The sample 8, e.g. the polymer sample, is placed in the chamber 6 defined by the first and second member 2, 4, in abutment with the radially extending surfaces 18 and 20. Expansion or shrinkage of the sample 8 is measured as an axial displacement of the first and second member 2, 4 relative to each other. The displacement can be measured using displacement measuring techniques known per se, e.g. laser-optic methods or LVDTs (linear variable differential transformers).

An elevated pressure may be applied to the sample 8, while measuring expansion or shrinkage. Thereto, a force F may be applied, forcing the first and second member 2, 4 towards each other. The force may be chosen such that a pressure on the order of 100 MPa is applied to the sample 8. Higher or lower pressures are also possible, however.

Heating or cooling may be applied to the sample 8, while measuring expansion or shrinkage. In Fig. 1 the dilatometer is, thereto, provided with heating and/or cooling means. In this example, the first and second member 2, 4 are provided with channels 22 and 24, respectively. A heating and/or cooling medium, e.g. water, may flow through the channels 22, 24. Other heating and/or cooling means such as Peltier elements and/or resistive heating elements may also be used.

In Fig. 1 the first and second members 2, 4 are provided with temperature sensors 26 adjacent the sample 8 for measuring and/or monitoring the temperature of the first and/or second member 2, 4 and/or the temperature of the sample.

In Fig. 1 the chamber 6 and sample 8 have substantially annular shapes. The radial width of the substantially annular chamber 6 may be chosen small relative to the axial height and the radial diameter of the substantially annular chamber 6. This allows for a radial thickness of the sample 8 to be chosen sufficiently small to enable rapid, substantially homogeneous, cooling or heating of the sample 8, substantially without introducing thermal gradients. As a non-limiting example, if the radial thickness of the sample 8 is for instance approximately 0.1 mm and water is used as the cooling medium flowing through channels 22, 24, cooling rates of the sample 8, on the order of 100 °C/s can be reached.

Shear may be applied to the sample 8, while measuring expansion or shrinkage. The dilatometer 1 is arranged to apply a relative movement of the first and second member 2, 4 with respect to each other. In the example of Fig. 1 the dilatometer is arranged to apply a relative rotation ω of the first and second member 2, 4 with respect to each other for shearing the sample. In the example of Fig. 1, the shear will be applied between the first-member-facing-part 12 of the sample 8, i.e. the radial inner surface of the annular sample 8, and the second-member-facing-part 16 of the sample 8, i.e. the radial outer surface of the annular sample 8. As the shear is applied across the radial thickness of the sample 8, substantially homogeneous shear can be applied to the sample 8. The shear rate can for example be of the order of 80 1/s.

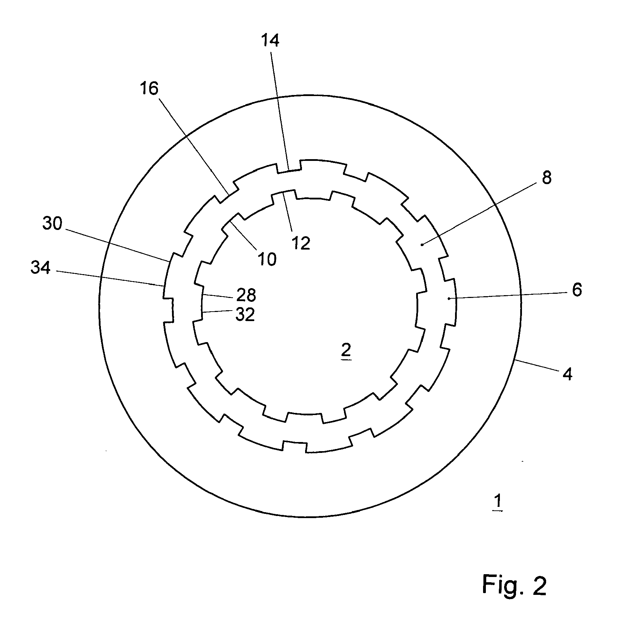

Fig. 2 shows an axial cross section of the dilatometer 1 of Fig. 1. In the example of Fig. 2, the chamber 6 is provided with a structure for mechanically engaging the sample 8 for substantially preventing a relative movement of the first member 2 with respect to the first-member-facing-part 12 of the sample 8 and a relative movement of the second member 4 with respect to the second-member-facing-part 16 of the sample 8 in a shearing direction. The shearing direction is the direction that is substantially parallel to the relative movement of the first and second member 2, 4.

In this example, the structure comprises a plurality of grooves 28 at the first surface 10 of the first member 2. In this example the structure also comprises a plurality of grooves 30 at the second surface 14 of the second member 4. In this example the grooves 28, 30 substantially extend in the axial direction along the first surface 10 of the first member 2 and the second surface 14 of the second member 4. The first-member-facing-part 12 of the sample 8 is provided with a plurality of ledges 32 which correspond to the grooves 28 on the first surface 10 of the first member 2. The second-member-facing-part 16 of the sample 8 is provided with a plurality of ledges 34 which correspond to the grooves 30 on the second surface 14 of the second member 4. The ledges 32, 34 on the sample 8 and the grooves 28, 30 on the first and second member 4 are in mechanical engagement. Thus, the shear can be applied to the sample 8, by applying the relative movement of the first and second member 2, 4 with respect to each other. The axial grooves 28, 30 and ledges 32, 34 also, in use, allow for a relative movement of the first member 2 with respect to the first-member-facing-part 12 of the sample 8 and/or a relative movement of the second member 4 with respect to the second-member-facing-part 16 of the sample 8, in the axial direction of the sample 8, i.e. the direction in which, in use, the shrinkage or expansion of the sample 8 is measured (measurement direction). Thus, the sample 8 is allowed to substantially freely shrink or expand in the direction in which, in use, the shrinkage or expansion is measured.

Friction forces acting between the sample 8 and the chamber 6 can cause errors in the measured displacement of the first and second member 2, 4 relative to each other in the direction in which, in use, the shrinkage or expansion is measured. The friction forces may thus cause errors in the measured expansion or shrinkage of the sample 8. In order to overcome, at least reduce, this problem, a surface of the chamber 6 (an inner wall of the chamber and/or the structure with which the chamber is provided) may be provided with a liquid or dry friction reducing layer. In use, the friction reducing layer substantially reduces friction of a relative movement of the first member 2 with respect to the first-member-facing-part 12 of the sample 8 and/or a relative movement of the second member 4 with respect to the second-member-facing-part 16 of the sample 8, in the measurement direction. The friction reducing layer does hardly affect, if at all, the aim to prevent slipping of the sample 8 in the shearing direction along the first and second member 2, 4. After all, the structure with which the chamber 6 is provided substantially prevents slipping. Examples of applicable friction reducing layers are silicon grease (liquid), PTFE and DLC (dry).

In the example of Fig. 2, the sample 8 and the first member 2 form-fittingly adjoin, by means of the grooves 28 and the ledges 32. In this example, also the sample 8 and the second member 4 form-fittingly adjoin, by means of the grooves 30 and the ledges 34. This provides the advantage that, in use, the relative movement of the first member 2 with respect to the first-member-facing-part 12 of the sample 8 and the relative movement of the second member 4 with respect to a second-member-facing-part 16 of the sample 8 is substantially prevented in the shearing direction. In Fig. 2 the entire first and second surface 10, 14, and the entire first-member-facing-part 12 and second-member-facing-part 16 are covered with the plurality of grooves 28, 30 and/or ledges 32, 34. This provides the advantage that the shear is applied substantially homogeneously over the entire sample 8. In this example the grooves 28, 30 and ledges 32, 34 are arranged substantially equidistantly on the first and second surface 10, 14 and the first-member-facing-part 12 and second-member-facing-part 16. This provides the advantage, that the sample can easily be arranged between the first and second member 2, 4 in substantially any angular orientation. In Fig. 2 the widths of the grooves 28, 30 and ledges and the widths of the surface separating the grooves 28, 30 and ledges 32, 34 are substantially equal.

In the example of Fig. 2 each groove 28, 30 corresponds with a ledge 32, 34. It is conceivable that the number of grooves 28 exceeds the number of ledges 32 and/or that the number of grooves 30 exceeds the number of ledges 34. This may enhance the ease with which the sample 8 can be arranged between the first and second member 2, 4.

In the example of Fig. 2, the ledges 32 on the first-member-facing-part 12 of the sample 8 and the ledges 34 on the second-member-facing-part 16 of the sample 8 are not aligned radially with respect to each other. It is conceivable that the ledges 32 and 34 are radially aligned or are in an other predetermined radial relationship with respect to each other (e.g. alternately arranged along the perimeter of the sample). Arranging the ledges 32 and 34 with a predetermined radial relationship with respect to each other may allow for the shear to be applied more homogeneously to the sample 8.

In the example, the first and second member are provided with grooves and the sample with ledges. It is conceivable that the first and/or second member is provided with ledges and that the sample is provided with grooves.

In the example, the first and second member and sample are provided with a plurality of grooves and/or ledges. It is pointed out that a single groove and/or ledge on the first and/or second member and the first-member-facing-part and/or second-member facing-part of the sample is also possible.

In the example, the grooves and ledges are part of a substantially cylindrical surface with a diameter that differs from the substantially cylindrical surface of the first or second member or sample. It is conceivable that the grooves and ledges may also have different shapes such as, but not limited to, rectangular, triangular, arched or sinoid.

In the example, the grooves and/or ledges extend in a direction substantially perpendicular to the shearing direction, and substantially parallel to the measurement direction (in the example in the axial direction of the sample). It is conceivable that the grooves and or ledges may also extend in an other direction (e.g. helically with respect to the annular sample), provided that the grooves and or ledges substantially prevent the relative movement of the first member with respect to the first-member-facing-part of the sample and the relative movement of the second member with respect to the second-member-facing-part of the sample, in the shearing direction, and provided that the grooves and/or ledges substantially allow for the relative movement of the first member with respect to the first-member-facing-part of the sample and/or the relative movement of the second member with respect to the second-member-facing-part of the sample, in the measurement direction.

In the example, the grooves and/or ledges extend along the full axial length of the sample. It is conceivable that the grooves and/or ledges may also extend along a part of the axial length of the sample. The ledges may, for example also be formed as notches (e.g. protruding in a corresponding groove). Also in this case, the grooves and/or ledges must substantially prevent the relative movement in the shearing direction, and substantially allow for the relative movement in the measurement direction.

In the example, the substantially cylindrical surface of the first and second member and sample in between the grooves or ledges is formed by substantially cylindrical segments. It is conceivable that the segments may also have different shapes such as, but not limited to, flat, triangular, arched or sinoid.

In the example, the sample has the substantially annular shape. It is possible that other shapes may be applied. The sample may also have a shape which is for example, but not limited to, cylindrical, cubic or rectangular.

In the example, the dilatometer is of the piston-die type. However, it is, in principle, also possible that the dilatometer is of another type, such as the confining-fluid type.

In the example, use of the dilatometer for characterisation of properties of polymers is mentioned. The dilatometer can also be used for characterisation of properties of for example, but not limited to, ceramics, soil, biological materials and food stuff.

Such variants are all understood to fall within the scope of the invention.

## Claims

1. Dilatometer for measuring shrinkage or expansion of a sample,
wherein the dilatometer is provided with a first and second member which, in combination, define a chamber for the sample,
wherein the dilatometer is arranged to apply a relative movement of the first and second member with respect to each other for shearing the sample, and
wherein the chamber is provided with a structure for, in use, mechanically engaging the sample for substantially preventing a relative movement of the first member with respect to a first-member-facing-part of the sample and a relative movement of the second member with respect to a second-member-facing-part of the sample, in a direction substantially parallel to the relative movement of the first and second member.

2. Dilatometer according to claim 1, wherein the structure is arranged to, in use, allow for a relative movement of the first member with respect to the first-member-facing-part of the sample and/or a relative movement of the second member with respect to the second-member-facing-part of the sample, in a direction in which, in use, the shrinkage or expansion of the sample is measured.

3. Dilatometer according to claim 1 or 2, wherein the dilatometer is provided with a sample in the chamber, and wherein a first surface of the first member is in mechanical engagement with the first-member-facing-part of the sample.

4. Dilatometer according to any one of claims 1-3, wherein the dilatometer is provided with a sample in the chamber, and wherein a second surface of the second member is in mechanical engagement with the second-member-facing-part of the sample.

5. Dilatometer according to any one of claims 1-4, wherein the dilatometer is provided with a sample in the chamber, and wherein the sample and the first and/or second member form-fittingly adjoin.

6. Dilatometer according to at least claim 3, wherein the first surface of the first member is provided with at least one groove and/or ledge.

7. Dilatometer according to at least claim 4, wherein the second surface of the second member is provided with at least one groove and/or ledge.

8. Dilatometer according to claim 6 or 7, wherein the first and/or second surface is provided with a plurality of grooves and/or ledges.

9. Dilatometer according to claim 8, wherein substantially the entire first and/or second surface facing the sample is covered with the plurality of grooves and/or ledges.

10. Dilatometer according to claim 8 or 9, wherein the grooves and/or ledges are arranged substantially equidistantly.

11. Dilatometer according to claim 10, wherein the widths of the grooves and/or ledges and the widths of the surface separating the grooves and/or ledges are substantially equal.

12. Dilatometer according to any one of the preceding claims, wherein the first and second member, in combination, define a substantially annular chamber for the sample.

13. Dilatometer according to claim 12, wherein the radial width of the substantially annular chamber is small relative to the axial height and the radial diameter of the substantially annular chamber.

14. Dilatometer according to claim 12 or 13, wherein the dilatometer is arranged to apply a relative rotation of the first and second member with respect to each other for shearing the sample.

15. Dilatometer according to claims 14 and 6, wherein the at least one groove and/or ledge on the first surface substantially extends in an axial direction.

16. Dilatometer according to claims 14 and 7, wherein the at least one groove and/or ledge on the second surface substantially extends in an axial direction.

17. Dilatometer according to any one of the preceding claims, wherein, at least in use, a surface of the chamber is provided with a friction reducing layer.

18. Dilatometer according to claim 17, wherein the surface of the chamber is provided with a dry friction reducing layer, such as PTFE or DLC.

19. Dilatometer according to any one of the preceding claims, wherein the first and/or second member are provided with heating and/or cooling means.

20. Sample apparently intended for use in a dilatometer according to any one of claims 1-19.

21. System for measuring shrinkage or expansion, comprising a dilatometer and a sample,
wherein the dilatometer is provided with a first and second member which, in combination, define a chamber for the sample,
wherein the dilatometer is arranged to apply a relative movement of the first and second member with respect to each other for shearing the sample, and
wherein the chamber is provided with a structure for, in use, mechanically engaging the sample for substantially preventing a relative movement of the first member with respect to a first-member-facing-part of the sample and a relative movement of the second member with respect to a second-member-facing-part of the sample, in a direction substantially parallel to the relative movement of the first and second member.

22. System according to claim 21, wherein the structure is arranged to, in use, allow for a relative movement of the first member with respect to the first-member-facing-part of the of the sample and/or a relative movement of the second member with respect to the second-member-facing-part of the sample, in a direction in which, in use, the shrinkage or expansion of the sample is measured.

23. System according to claim 21 or 22, wherein the first and second member, in combination, define a substantially annular chamber and wherein the sample is substantially annular.

24. System according to any one of claims 21-23, wherein, at least in use, a surface of the chamber is provided with a friction reducing layer.

25. Sample of the system according to any one of claims 21-24.
